# EUROPÄISCHE PATENTSCHRIFT

(11) **EP 2 679 414 B1**
(45) Veröffentlichungstag und Bekanntmachung des Hinweises auf die Patenterteilung: **18.02.2015**
(21) Anmeldenummer: 13002938.2
(22) Anmeldetag: 07.06.2013
(51) Int. Cl.: B60C 27/00

(54) **Verfahren zur Erkennung von an Fahrzeugrädern angelegten Schneeketten**
Method for detecting snow chains mounted on motor vehicle wheels
Procédé de détection de chaînes à neige montées sur roues de véhicule

(30) Priorität: 28.06.2012 DE 102012105700
(43) Veröffentlichungstag der Anmeldung: 01.01.2014
(73) Patentinhaber: Dr. Ing. h.c. F. Porsche Aktiengesellschaft, 70435 Stuttgart (DE)
(72) Erfinder: Mack, Georg, 71735 Eberdingen (DE)

(56) Entgegenhaltungen:
- EP-A1- 2 006 126
- DE-A1- 10 358 089
- DE-A1-102008 024 873
- DE-A1-102008 057 986
- DE-A1-102010 006 666

## Beschreibung

Die Erfindung betrifft ein Verfahren zur Erkennung von an Fahrzeugrädern angelegten Schneeketten, insbesondere für ein Kraftfahrzeug.

Das Aufziehen von Schneeketten zumindest auf die angetriebenen Räder eines Kraftfahrzeugs ist bei schneeglatten oder schneebedeckten Straßen zum Teil vorgeschrieben. Hierzu sind insbesondere in den alpinen Ländern Vorschriften für das Anlegen von Schneeketten bekannt und in manchen Ländern ist in den Wintermonaten auch das Mitführen von Schneeketten neben dem Benutzen von Winterreifen Vorschrift.

Insbesondere bei Fahrzeugen mit Heckantrieb und Hinterradlenkung ist es zum Teil relevant, ob an den Hinterrädern Schneeketten angelegt sind, da durch die Anlage der Schneeketten auf die Räder der benötigte Raum für die Räder vergrößert wird, was bei Lenkmanövern der Hinterräder nicht immer gewährleistet werden kann, weil der Bauraum für die Radhäuser knapp bemessen sein kann. Daher kann in Betriebssituationen des Kraftfahrzeugs mit angelegten Schneeketten die Hinterradlenkung zum Teil elektronisch in ihrem Lenkwinkel eingeschränkt oder gar abgeschaltet werden.

Zur automatisierten oder teilautomatisierten Beeinflussung der Hinterradlenkung ist die Kenntnis über angelegte Schneeketten nötig.

Die DE 102 53 223 A1 offenbart eine Vorrichtung mit einem Magnetfeldsensor, welcher an einem Radhaus angebracht ist und der eine an ein Rad angelegte Schneekette erkennt. Dabei ist im Rad oder Reifen ein magnetisierter Bereich vorhanden und der Sensor detektiert die Magnetisierung und die Auswerteeinheit erkennt eine Veränderung in der Magnetisierung aufgrund des Vorhandenseins der Schneekette. Diese Vorrichtung ist jedoch nachteilig, weil ein gesonderter Sensor zur Erkennung der angelegten Schneekette benötigt wird, was die Kosten erhöht.

Aus der DE 10 2010 006 666 A1 ist ein Verfahren zum Erkennen einer Schneekette an einem Rad eines Fahrzeugs bekannt. Das vorbekannte Verfahren greift auf die Signale von Raddrehzahl-Sensoren, Höhenstands-Sensoren oder Radbeschleunigungssensoren zurück und werten die erhaltenen Signale zum Erkennen einer Schneekette an den Hinterrädern aus. Nachfolgend wird eine Hinterradlenkung des Fahrzeugs deaktiviert.

Die DE 10 2008 024 873 A1 offenbart eine Sensoreinheit mit einem kapazitiven Sensor, welcher während eines Fahrzeugstillstands vor Fahrtbeginn die aktuelle Kapazität des kapazitiven Sensors ermittelt. Die vorbekannte Vorrichtung ermöglicht, dass montierte Schneeketten bereits direkt nach der Montage im stehenden Fahrzeug, beispielsweise nach einer Aktivierung der Zündung, erkannt werden und diese Information in anderen Fahrzeugsystemen verwendet werden kann.

Es ist die Aufgabe der Erfindung ein Verfahren zur Erkennung von an Fahrzeugrädern angelegten Schneeketten, insbesondere für ein Kraftfahrzeug, zu schaffen, welche einfach und dennoch kostengünstig durchführbar ist.

Die Aufgabe wird erreicht mit den Merkmalen von Anspruch 1, wonach ein Verfahren zur Erkennung von an Fahrzeugrädern angelegten Schneeketten, insbesondere für ein Kraftfahrzeug mit Hinterradlenkung geschaffen wird, mit der Erkennung von Fahrzeugaktionen, wobei eine vordefinierte Abfolge von Fahrzeugaktionen als Vorgang zum Anlegen einer Schneekette interpretiert wird, wobei die Fahrzeugaktionen ein Öffnen einer Fahrzeugtür, ein Schließen einer Fahrzeugtür, Aussteigen einer Person, Einsteigen einer Person, ein Öffnen einer Kofferraumhaube, ein Schließen einer Kofferraumhaube, eine Entnahme einer Schneekette aus einer Schneekettehalterung, Erschütterungen an einem Rad, ein Vor- und/oder Zurückfahren des Fahrzeugs, eine geöffnete Fahrzeugtür ist, wonach auf das Vorhandensein einer angelegten Schneekette geschlossen wird, wobei zumindest einzelne der nachfolgenden Fahrzeugaktionen in einer vorgebbaren Reihenfolge detektiert werden:
- ein Öffnen einer Fahrzeugtür,
- ein Austeigen einer Person,
- ein Schließen einer Fahrzeugtür,
- ein Öffnen einer Kofferraumhaube,
- eine Entnahme einer Schneekette aus einer Schneekettehalterung,
- ein Schließen einer Kofferraumhaube
- Erschütterungen an einem Rad,
- ein Öffnen einer Fahrzeugtür,
- Einsteigen einer Person,
- ein Vor- und/oder Zurückfahren des Fahrzeugs.

Dadurch werden Signale ermittelt und ausgewertet, die auf eine Anlage einer Schneekette hindeuten können.

Bevorzugt ist es, wenn nach erkannter angelegter Schneekette eine Abfrage an den Fahrzeugführer ausgebgeben wird, die abfragt, ob eine Schneekette angelegt ist und erst nach positiver Beantwortung eine Schneekette als angelegt angesehen wird. Dadurch wird noch einmal zur Absicherung abgefragt, ob das erkannte Anlegen einer Schneekette tatsächlich stattgefunden hat.

Auch ist es zweckmäßig, wenn nach erkannter angelegter Schneekette eine Abfrage an den Fahrzeugführer ausgebgeben wird, die abfragt, ob eine Schneekette angelegt ist und erst nach negativer Beantwortung eine Schneekette als nicht angelegt angesehen wird. In diesem Falle wird bei einem erkennen eines Anlegens einer Schneekette solange davon ausgegangen, dass dies auch so ist, bis der Fahrer des Fahrzeugs dies verneint. So kann beim Einschränken oder Abschalten einer Hinterradlenkung davon ausgegangen werden, dass es zumindest nicht zu einer ungewollten Beschädigung kommt, so lange nicht eine entsprechende Freigabe gegeben wird.

Auch ist es zweckmäßig, wenn nach erkannter angelegter Schneekette auch ohne eine Abfrage an den Fahrzeugführer, ob eine Schneekette angelegt ist, eine Schneekette als angelegt angesehen wird. In diesem Ausführungsbeispiel wird von der Richtigkeit der Erkennung ausgegangen.

Auch ist es dabei vorteilhaft, wenn zumindest einzelne Fahrzeugaktionen zumindest zweifach durchgeführt werden.

Weitere vorteilhafte Ausgestaltungen sind durch die nachfolgende Figurenbeschreibung und durch die Unteransprüche beschrieben.

Nachstehend wird die Erfindung auf der Grundlage zumindest eines Ausführungsbeispiels anhand der Zeichnungen näher erläutert. Es zeigen:
- Fig. 1: eine schematische Ansicht eines Blockschaltbilds zur Erläuterung eines Ablaufs eines Verfahrens,
- Fig. 2: ein Diagramm mit Radhubsignalen zur Erläuterung der Erkennung der angelegten Schneeketten,
- Fig. 3: ein Diagramm zur Erkennung eines Reibwertsprungs aufgrund angelegter Schneeketten, und
- Fig. 4: ein Blockschaltbild zur Erläuterung eines erfindungsgemäßen Verfahrens zur Erkennung angelegter Schneeketten aufgrund Fahrzeugaktionen.

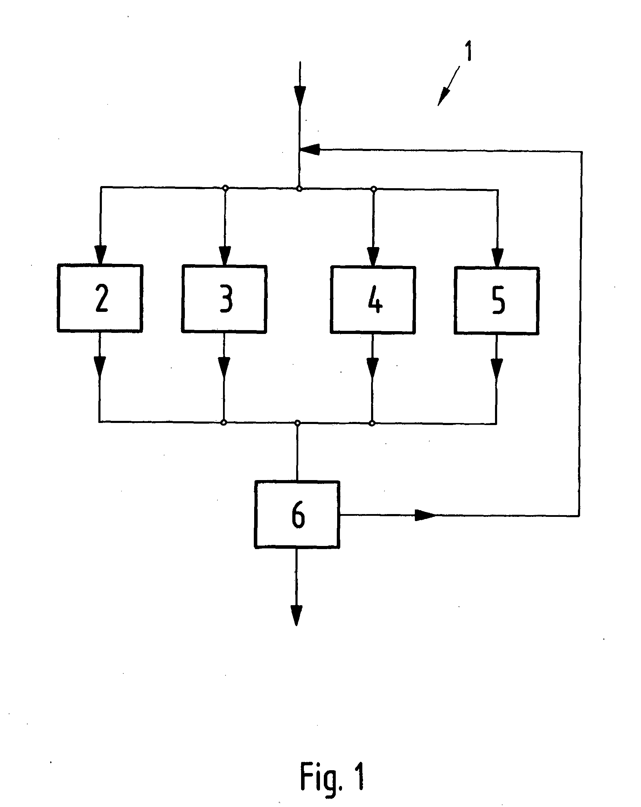

Die Figur 1 zeigt ein Blockschaltbild 1 zur Erläuterung eines Ablaufes eines Verfahrens zur Erkennung von an einem Fahrzeugrad oder an Fahrzeugrädern angelegten Schneeketten.

In dem Blockschaltbild 1 ist zu erkennen, dass eine Verzweigung der Erkennungsstrategie erfolgt, indem eine erste Strategie 2 zur Ermittlung und Auswertung von Radhubsignalen durchgeführt wird, um anhand der Radhubsignale das Vorhandensein angelegter Schneeketten zu erkennen.

Darüber hinaus kann zusätzlich oder alternativ eine Strategie zur Detektierung und Auswertung von Aufbaubeschleunigungs-signalen 3 vorgenommen werden, um aus diesen Aufbaubeschleunigungssignalen das Vorhandensein einer angelegten Schneekette ermitteln zu können.

Weiterhin kann alternativ oder zusätzlich eine Reibwerterkennung 4 durchgeführt werden, die einen Aufschluss darüber zulässt, festzustellen, ob Schneeketten an zumindest einem Rad angelegt sind oder nicht.

Weiterhin kann alternativ oder zusätzlich ein Verfahren zur Erkennung und Auswertung von Fahrzeugaktionen 5 durchgeführt werden, zur Bestimmung, ob angelegte Schneeketten vorhanden sind.

Das Verfahren zur Detektierung und Auswertung von Radhubsignale 2, der Aufbaubeschleunigungssignale 3, des Reibwerts 4 oder der Fahrzeugaktionen 5 führt jeweils für sich betrachtet zu einem Zwischenergebnis, nach welchem festgestellt wird, ob Schneeketten angelegt sind oder nicht.

Nach Feststellung eines Zwischenergebnisses, ob Schneeketten angelegt sind oder nicht, kann in Schritt 6 von einem Benutzer des Fahrzeuges, wie beispielsweise dem Fahrer, abgefragt werden, ob Schneeketten tatsächlich angelegt sind oder nicht.

Dabei kann eine Schneekette als angelegt gelten, wenn nach Erkenntnis der Verfahren 2 bis 5 die positive nutzerseitige Beantwortung der Frage, ob Schneeketten angelegt sind, vorliegt.

Alternativ kann die Frage, ob Schneeketten angelegt sind, solang als positiv bewertet angesehen werden, bis eine nutzerseitige Abfrage auch nutzerseitig negativ beantwortet wird.

Weiterhin alternativ kann die nutzerseitige Anfrage entfallen und das Zwischenergebnis der Erkennungsverfahren 2 bis 5 als endgültige Feststellung angesehen werden.

Für den Fall, dass nur einzelne der Erkennungsverfahren 2 bis 5 durchgeführt werden bzw. nur einzelne Verfahren das Vorhandensein einer angelegten Schneekette signalisieren, kann eine Abfrage des Nutzers plausibel und notwendig sein. Das Zwischenergebnis einer einzelnen Ermittlung, ob Schneeketten angelegt sind, kann jedoch auch für sich betrachtet verwendet werden, ohne dass eine nutzerseitige Abfrage durchgeführt wird.

Für den Fall, dass mehr als ein Verfahren zur Erkennung der Anlage einer Schneekette durchgeführt wird, kann eine Plausibilisierung der einzelnen Zwischenergebnisse durchgeführt werden, wobei auch eine Gewichtung der einzelnen Ergebnisse durchgeführt werden kann. So kann beispielsweise bei drei verschiedenen Erkennungsverfahren das jeweilige Zwischenergebnis gewichtet werden, so dass bei unterschiedlichen Ergebnissen ein gewichtetes Endergebnis herangezogen werden kann. So kann beispielsweise bei zwei positiven Ergebnissen und einem negativen Ergebnis das negative Ergebnis dennoch überwiegen, wenn die Gewichtung dieses Verfahrens deutlich über den Gewichtungen der beiden anderen Verfahren liegt.

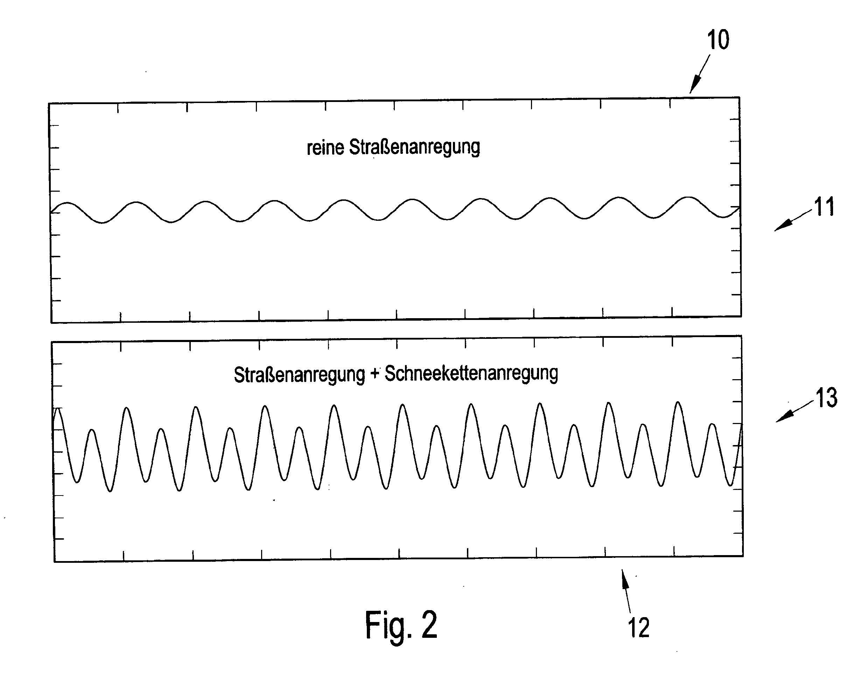

Die Figur 2 zeigt ein Diagramm 10 zur Verdeutlichung der Auswertung von Radhubsignalen für die Schneekettenerkennung.

Im oberen Diagramm 10 ist eine Kurve 11 dargestellt, die den zeitlichen Verlauf eines Radhubsignals von der Vorderachse eines Kraftfahrzeuges darstellt. Im zweiten Diagramm 12 ist der zeitliche Verlauf eines Radhubsignales 13 dargestellt, das von einer Hinterachse des Fahrzeuges mit angelegten Schneeketten resultiert, wobei zu erkennen ist, dass der zeitliche Verlauf des Radhubsignales 11 der Vorderachse eine kleinere Amplitude und eine größere Wellenlänge aufweist als der zeitliche Verlauf des Radhupsignales 13 des Signals der Hinterachse.

Bei Anregungen aufgrund des Straßenbelages und ohne angelegte Schneeketten, würde an der Hinterachse eine identische oder ähnliche Anregung wie an der Vorderachse erwartet werden.

Aufgrund der Anlage der Schneeketten nur auf einer angetriebenen Achse, wie hier im Beispiel an der Hinterachse, entsteht eine deutlich unterschiedliche Anregung der Radhubsignale der Hinterachse, so dass aus der Differenz der Radhubsignale ein Rückschluss auf das Vorhandensein von angelegten Schneeketten an der Hinterachse möglich und zulässig ist.

Besonders vorteilhaft ist es, wenn die Differenz der Radhubsignale 11, 13 zwischen der angetriebenen Achse und der nicht angetriebenen Achse ein Muster oder einen zeitlichen Verlauf aufweist, der für Schneeketten typisch ist, weil er mit der Periodizität der Schneekette einhergeht. Da Schneeketten jedoch üblicherweise abhängig vom Hersteller und Modell unterschiedliche Gestaltungen aufweisen, kann auch bereits eine systematische Unterscheidung der Radhupsignale zwischen der Vorderachse und der Hinterachse, also der angetriebenen und der nicht angetriebenen Räder, als Indiz für angelegte Schneeketten herangezogen werden.

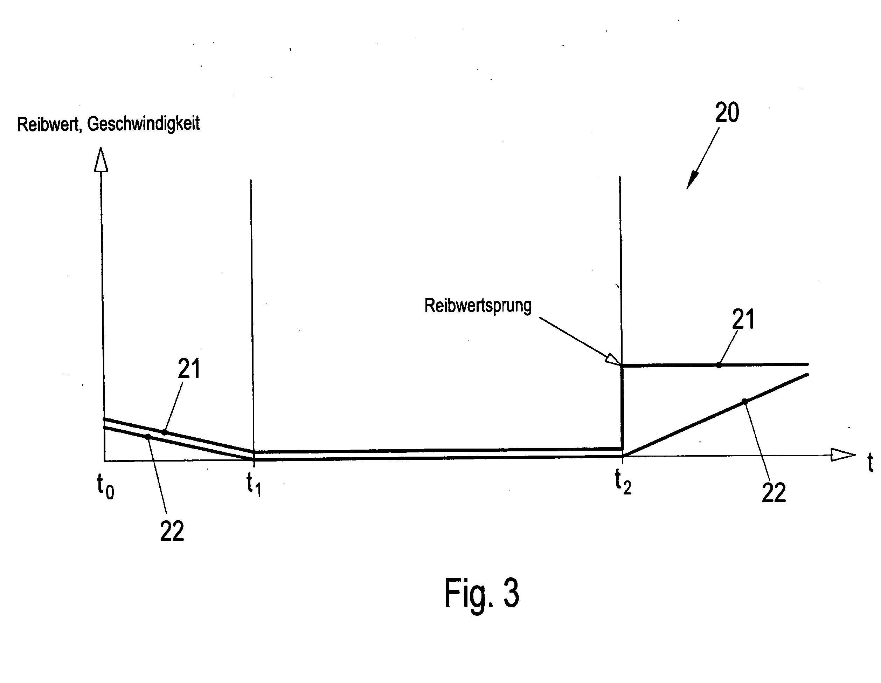

Die Figur 3 zeigt ein Diagramm 20, in welchem zum einen der Reibwert 21 und zum anderen die Geschwindigkeit 22 eines Fahrzeugs dargestellt ist.

Im ersten Zeitabschnitt von Zeitpunkt t0 bis t1 nimmt im Diagramm 20 der Reibwert 21 ab und gleichzeitig nimmt auch die Geschwindigkeit 22 des Fahrzeuges ab. Dies deutet daraufhin, dass aufgrund einer glatten Fahrbahn die Traktion der Antriebsräder nicht sehr hoch ist, so dass eine hohe Fahrzeuggeschwindigkeit nicht erreicht werden kann oder der Nutzer des Fahrzeuges eine hohe Geschwindigkeit nicht wünscht, weil es nicht den vorherrschenden Straßenbedingungen entsprechen würde.

Entsprechend kann davon ausgegangen werden, dass eine für eine Schneekettenanlage adäquate Straßenbedingung vorliegt.

Zwischen dem Zeitpunkt t1 und t2 ist die Geschwindigkeit des Fahrzeuges Null und der Reibwert wird ebenfalls als niedrig bzw. Null angesehen, weil er den letzten Wert während der Phase annimmt oder als Null festgelegt wird, weil das Fahrzeug steht.

Zum Zeitpunkt t2 wird das Fahrzeug wieder in Betrieb genommen und mit beziehungsweise nach dem Anfahren wird ein Reibwert 21 ermittelt, der deutlich größer ist als der zuletzt ermittelte Reibwert 21 in der Phase des Zeitraums von t0 bis t1, was auf einen Reibwertsprung hindeutet. Gleichzeitig nimmt die Geschwindigkeit 22 deutlich zu, wobei der Reibwert auf hohem Niveau im Wesentlichen konstant bleibt.

Dies kann als Anlegen von Schneeketten im Zeitraum t1 bis t2 interpretiert werden, so dass für Zeiten größer t2 mit angelegten Schneeketten gefahren wird.

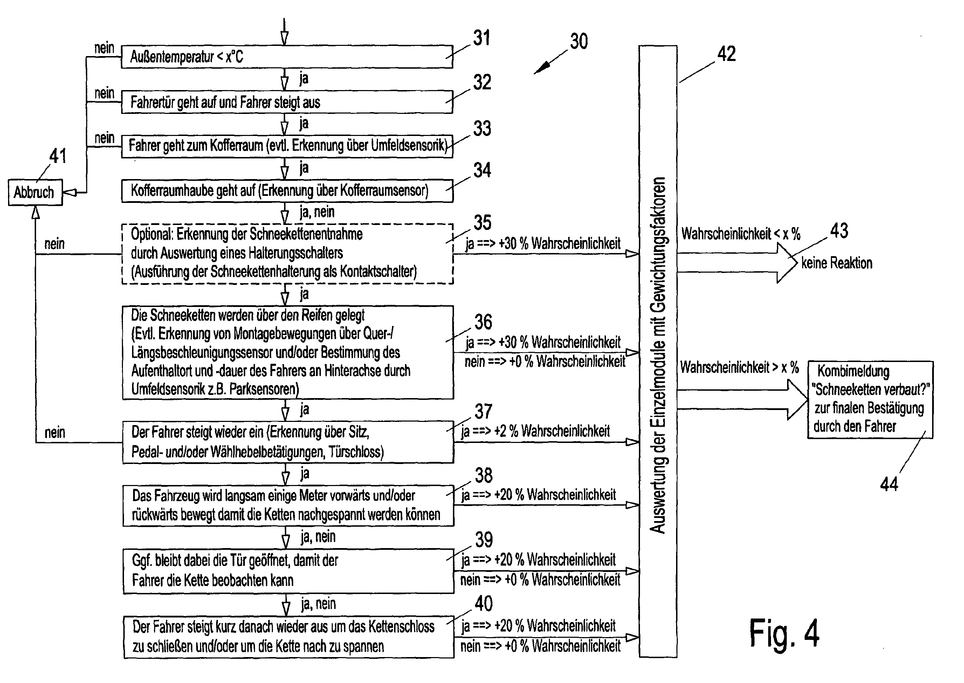

Die Figur 4 zeigt ein Diagramm 30, in welchem ein erfindungsgemäßer Ablauf des Verfahrens zur Erkennung von angelegten Schneeketten anhand von Fahreraktionen erläutert wird, wobei eine vordefinierte Abfolge von Fahreraktionen als Vorgang zum Anlegen einer Schneekette interpretiert wird.

Das Diagramm 30 der Figur 4 beginnt in Block 31 mit der Abfrage der Außentemperatur. Liegt die Außentemperatur unterhalb eines vordefinierten Schwellenwertes, von beispielswiese 4°C, so wird das Verfahren zur Erkennung von angelegten Schneeketten begonnen.

In Block 31 wird abgefragt, ob eine Tür, beispielsweise die Fahrertür, geöffnet wird und eine Person, beispielsweise der Fahrer aussteigt. Dies kann beispielsweise mittels Türkontaktschaltern und Sitzbelegungssensoren erfolgen, die erkennen lassen, dass die Tür geöffnet und eine Person, die auf diesem Sitz saß, ausgestiegen ist.

In Block 33 wird detektiert, ob eine Person zum Kofferraum geht. Dies kann beispielsweise über eine Umfeldsensorik erkannt werden. Dadurch kann von der gemäß Block 32 geöffneten Tür sich eine Person zum Kofferraum bewegen, was detektiert wird.

In Block 34 wird erkannt, ob der Kofferraum geöffnet wird, beispielsweise über eine Kofferraumöffnungssensorik.

In Block 35 wird erkannt ob eine Schneekettenentnahme aus der diesbezüglichen Halterung durch Auswertung eines Halterungsschalters für die Schneekettenhalterung betätigt ist.

In Block 36 wird gegebenenfalls durch Längsbeschleunigungs- oder Querbeschleunigungssensoren eine Montagebewegung der Reifen beziehungsweise der Räder erkannt, was daraufhin deuten könnte, dass Schneeketten über deren Reifen gelegt werden.

Weiterhin kann erkannt werden, ob eine Person sich an der Hinterachse, insbesondere der angetriebenen Achse, länger aufhält, was auf ein Montieren von Schneeketten hindeuten mag.

Gemäß Block 36 kann somit aufgrund der möglichen detektierten Montagebewegungen als auch aufgrund des Aufenthalts einer Person in der Nähe einer Achse ein Montieren einer Schneekette erkannt werden.

In Block 37 wird erkannt, dass eine Person wieder in das Fahrzeug einsteigt. Dies kann beispielsweise durch Öffnen der Tür und/oder ein anschließendes Schließen der Tür und/oder über eine Sitzbelegung und/oder eine Pedalbetätigung und/oder eine Wählhebelbetätigung und/oder über ein betätigtes Türschloss und/oder über einen betätigten Türöffner erfolgen, wobei eine solche Aktion als Einsteigen identifiziert werden kann.

In Block 38 wird ein Vor- und Zurückfahren des Fahrzeuges, was üblicherweise vorgenommen wird, um anschließend die Ketten noch einmal nach spannen zu können, detektiert. Dabei kann das Fahrzeug langsam einige Meter vor oder zurück bewegt werden.

In Block 39 wird erkannt, dass eine Tür während des Prozesses gemäß Block 38 geöffnet ist/bleibt. Dies deutet daraufhin, dass während des Vor- und Zurückfahrens der Fahrer die Kette beobachtet.

In Block 40 wird erkannt, dass eine Person, insbesondere der Fahrer, kurz nach dem Vor- und Zurückfahren des Fahrzeugs kurz aus dem Auto aussteigt, um das Kettenschloss zu schließen oder um die Kette nach zu spannen.

Ist die Abfrage in den Blöcken 31, 32, 33, 35 oder 37 negativ beantwortet, so wird in Block 41 das Verfahren beendet, wobei eine Schneekette nicht als angelegt gilt. Anderenfalls wird eine Auswertung vorgenommen, ob die Einzelabfragen zu einem Ergebnis führen, dass eine Schneekette angelegt wurde. Dabei wird die Beantwortung der Frage in Block 35 mit Ja mit einer 30% Wahrscheinlichkeit gewichtet, dass eine Schneekette angelegt wird. Auch die Abfrage in Block 36 wird bei positiver Beantwortung mit 30% Wahrscheinlichkeit belegt. Die Abfragen der Blöcke 38, 39 und 40 werden mit positiven Beantwortungen mit jeweils mit 20% gewichtet, wobei die Abfrage aus Block 37 mit nur einer 2% Wahrscheinlichkeit bei einer positiven Beantwortung gewichtet wird.

In Block 42 werden die Ergebnisse der Abfragen mit ihren Wahrscheinlichkeiten zusammengeführt und bewertet, wobei bei einer Wahrscheinlichkeit die unterhalb eines Schwellenwertes liegt, eine weitere Reaktion gemäß Pfeil 43 veranlasst wird und bei einer Wahrscheinlichkeitssumme der Einzelblöcke, die oberhalb eines Schwellenwertes liegt, wird auf eine angelegte Schneekette gemäß Block 44 erkannt.

Abschließend kann noch einmal eine Abfrage an einen Nutzer des Fahrzeuges vorgenommen werden, die dann durch Bestätigung oder nicht Bestätigung zu dem finalen Ergebnis der Feststellung der angelegten Schneekette führen kann.

## Patentansprüche

1. Verfahren zur Erkennung von an Fahrzeugrädern angelegten Schneeketten, insbesondere für ein Kraftfahrzeug mit Hinterradlenkung, mit der Erkennung von Fahrzeugaktionen, wobei eine vordefinierte Abfolge von Fahrzeugaktionen als Vorgang zum Anlegen einer Schneekette interpretiert wird, wobei die Fahrzeugaktionen ein Öffnen einer Fahrzeugtür, ein Schließen einer Fahrzeugtür, Aussteigen einer Person, Einsteigen einer Person, ein Öffnen einer Kofferraumhaube, ein Schließen einer Kofferraumhaube, eine Entnahme einer Schneekette aus einer Schneekettehalterung, Erschütterungen an einem Rad, ein Vor- und/oder Zurückfahren des Fahrzeugs, eine geöffnete Fahrzeugtür ist, wonach auf das Vorhandensein einer angelegten Schneekette geschlossen wird, wobei zumindest einzelne der nachfolgenden Fahrzeugaktionen in einer vorgebbaren Reihenfolge detektiert werden:
- ein Öffnen einer Fahrzeugtür,
- ein Austeigen einer Person,
- ein Schließen einer Fahrzeugtür,
- ein Öffnen einer Kofferraumhaube,
- eine Entnahme einer Schneekette aus einer Schneekettehalterung,
- ein Schließen einer Kofferraumhaube
- Erschütterungen an einem Rad,
- ein Öffnen einer Fahrzeugtür,
- Einsteigen einer Person,
- ein Vor- und/oder Zurückfahren des Fahrzeugs.

2. Verfahren nach Anspruch 1, **dadurch gekennzeichnet, dass** nach erkannter angelegter Schneekette eine Abfrage an den Fahrzeugführer ausgebgeben wird, die abfragt, ob eine Schneekette angelegt ist und erst nach positiver Beantwortung eine Schneekette als angelegt angesehen wird.

3. Verfahren nach Anspruch 1, **dadurch gekennzeichnet, dass** nach erkannter angelegter Schneekette eine Abfrage an den Fahrzeugführer ausgegeben wird, die abfragt, ob eine Schneekette angelegt ist und erst nach negativer Beantwortung eine Schneekette als nicht angelegt angesehen wird.

4. Verfahren nach Anspruch 1, **dadurch gekennzeichnet, dass** nach erkannter angelegter Schneekette auch ohne eine Abfrage an den Fahrzeugführer, ob eine Schneekette angelegt ist, eine Schneekette als angelegt angesehen wird.

5. Verfahren nach Anspruch 1, **dadurch gekennzeichnet, dass** zumindest einzelne Fahrzeugaktionen zumindest zweifach durchgeführt werden.

## Claims

1. Method for detecting snow chains mounted on vehicle wheels, in particular for a motor vehicle having rear-wheel steering, with the detection of vehicle actions, wherein a predefined sequence of vehicle actions is interpreted as a process for mounting a snow chain, wherein the vehicle actions comprise opening of a vehicle door, closing of a vehicle door, a person exiting the vehicle, a person entering the vehicle, opening of a boot lid, closing of a boot lid, removal of a snow chain from a snow chain holder, vibrations at a wheel, the vehicle moving forwards and/or backwards, an opened vehicle door, according to which the presence of a mounted snow chain is inferred, wherein at least some of the subsequent vehicle actions are detected in a predefinable sequence:
- opening of a vehicle door,
- exiting of a person from the vehicle,
- closing of a vehicle door,
- opening a boot lid,
- removal of a snow chain from a snow chain holder,
- closing of a boot lid,
- vibrations at a wheel,
- opening of a vehicle door,
- a person entering the vehicle, and
- the vehicle moving forwards and/or backwards.

2. Method according to Claim 1, **characterized in that** after a mounted snow chain has been detected an enquiry is issued to the vehicle driver which enquires whether a snow chain is mounted, and a snow chain is considered to be mounted only after a positive response.

3. Method according to Claim 1, **characterized in that** after a mounted snow chain has been detected an enquiry is issued to the vehicle driver which enquires whether a snow chain is mounted and a snow chain is not considered not to be mounted until after a negative response.

4. Method according to Claim 1, **characterized in that** after a mounted snow chain has been detected a snow chain is considered to be mounted even without an enquiry to the vehicle driver as to whether a snow chain is mounted.

5. Method according to Claim 1, **characterized in that** at least some vehicle actions are carried out at least twice.

## Revendications

1. Procédé de détection de chaînes à neige montées sur des roues de véhicules, en particulier pour un véhicule automobile avec direction par les roues arrière, avec la détection d'actions du véhicule, dans lequel on interprète une succession prédéterminée d'actions du véhicule comme processus pour le montage d'une chaîne à neige, dans lequel les actions du véhicule sont une ouverture d'une porte du véhicule, une fermeture d'une porte du véhicule, la sortie d'une personne, la montée d'une personne, une ouverture d'un coffre à bagages, une fermeture d'un coffre à bagages, un enlèvement d'une chaîne à neige hors d'un support de chaîne à neige, des vibrations à une roue, un déplacement avant et/ou arrière du véhicule, une porte du véhicule ouverte, selon laquelle on conclut à la présence d'une chaîne à neige montée, dans lequel on détecte au moins certaines des actions du véhicule suivantes dans un ordre susceptible d'être prédéterminé:
- une ouverture d'une porte du véhicule,
- une sortie d'une personne,
- une fermeture d'une porte du véhicule,
- une ouverture d'un coffre à bagages,
- un enlèvement d'une chaîne à neige hors d'un support de chaîne à neige,
- une fermeture d'un coffre à bagages,
- des vibrations à une roue,
- une ouverture d'une porte du véhicule,
- une montée d'une personne,
- un déplacement avant et/ou arrière du véhicule.

2. Procédé selon la revendication 1, **caractérisé en ce que**, après la détection d'une chaîne à neige montée, on pose une question au conducteur du véhicule, par laquelle on lui demande si une chaîne à neige est montée, et on ne considère une chaîne à neige comme montée qu'après une réponse affirmative.

3. Procédé selon la revendication 1, **caractérisé en ce que**, après la détection d'une chaîne à neige montée, on pose une question au conducteur du véhicule, par laquelle on lui demande si une chaîne à neige est montée, et on ne considère une chaîne à neige comme non montée qu'après une réponse négative.

4. Procédé selon la revendication 1, **caractérisé en ce que**, après la détection d'une chaîne à neige montée, aussi sans poser de question au conducteur du véhicule pour lui demander si une chaîne à neige est montée, une chaîne à neige est considérée comme montée.

5. Procédé selon la revendication 1, **caractérisé en ce que** l'on exécute au moins deux fois au moins certaines des actions du véhicule.
